# EUROPÄISCHE PATENTSCHRIFT

(11) **EP 0 766 369 B1**
(45) Veröffentlichungstag und Bekanntmachung des Hinweises auf die Patenterteilung: **15.03.2000**
(21) Anmeldenummer: 96111854.4
(22) Anmeldetag: 23.07.1996
(51) Int. Cl.: H02K 23/66, H02K 11/00

(54) **Gleichstrommotor**
DC motor
Moteur à courant continu

(30) Priorität: 26.09.1995 DE 29515381 U; 10.04.1996 DE 19614216
(43) Veröffentlichungstag der Anmeldung: 02.04.1997
(73) Patentinhaber: INTERELECTRIC AG, CH-6072 Sachseln (CH)
(72) Erfinder: Mayer, Jürgen, 6072 Sachseln (CH); Teimel, Arnold, 6072 Sachseln (CH)
(74) Vertreter: Grünecker, Kinkeldey, Stockmair & Schwanhäusser Anwaltssozietät

(56) Entgegenhaltungen:
- DE-A- 2 819 821
- DE-A- 4 326 391
- FR-A- 2 278 187
- GB-A- 975 299
- GB-A- 1 031 770
- GB-A- 1 090 937
- GB-A- 2 161 031
- JP-A- 5 422 505
- PATENT ABSTRACTS OF JAPAN vol. 010, no. 016 (E-375), 22.Januar 1986 & JP 60 176439 A (MATSUSHITA DENKI SANGYO KK), 10.September 1985,

## Beschreibung

Die Erfindung betrifft einen Gleichstrommotor, insbesondere einen Mikrogleichstrommotor, mit einer Welle, einem darauf angeordnetem Kollektorelement, bestehend aus einer Kollektorplatte und einem von der Kollektorplatte über das Wellenende hinaus abstehenden Kollektor.

In jüngster Zeit verlangt die Industrie zunehmend Gleichstrommotoren die mit zusätzlichen Bauelementen, z.B. mit einem integriertem Winkelschrittgeber, ausgestattet sind.

Um diesem Bedürfnis der Industrie nachzukommen werden verschiedenste Wege eingeschlagen. So ist es zum Beispiel bekannt die Codescheibe des Winkelschrittgebers direkt an der Kollektorplatte zu befestigen. Insbesondere bei Codescheiben mit magnetischen Polen können hierbei jedoch Wechselwirkungen mit dem Feld des Statormagneten auftreten, die zu axialen Vibrationen führen.

An der Kollektorplatte angebrachte optische Codescheiben werden in ihrer Funktionssicherheit beeinträchtigt, zum Beispiel bei Verwendung von Metallbürsten durch Verschmutzung durch Schmierstaub und bei Verwendung von Kohlebürsten durch Verschmutzung durch Kohlestaub.

Das am häufigsten verwendete Verfahren sieht im Gegensatz zu der oben beschriebenen Anordnung des Winkelschrittgebers dagegen vor, nach Fertigstellung des Motors, bzw. nach dessen Montage, den Winkelschrittgeber an einem Wellenende anzubauen wie es aus der JP-A-60176439 beispielsweise bekannt ist. Dazu muß der Motor über eine durchgehende Welle verfügen. Im Vergleich zu einem Motor ohne durchgehende Welle erfordert der Motor mit durchgehender Welle jedoch einen grösseren Kollektordurchmesser. Mit dem grösseren Kollektor ist jedoch ein höherer Bürstenabrieb verbunden, wodurch die Nutzungsdauer des Motors verkürzt wird.

Insbesondere im Hinblick auf Mikromotoren ist die Anwendbarkeit des letzteren Verfahrens jedoch äußerst begrenzt. Hierbei müssen in erste Linie die bei der Fertigung der Welle auftretenden Probleme berücksichtigt werden. Während die Welle für große Motoren in beliebiger Länge gefertigt werden kann, ist die Herstellung längerer Wellen für Mikromotoren mit einem erheblichen fertigungstechnischen Aufwand verbunden. In diesem Zusammenhang sind insbesondere die hohen Anforderungen an die Maßgenauigkeit solcher Mikrowellen anzuführen. Die für die Welle gestatteten engen Toleranzen führen dazu, daß bei der Fertigung ein hoher Ausschuß an unbrauchbaren bzw. für den Einsatz in Motoren nicht geeigneten Wellen produziert wird, so daß hier unter Umständen Engpässe bei der Lieferung auftreten können. Ferner ist die Herstellung der Wellen für Mikromotoren teuer und zeitaufwendig.

In der JP-A-5422505 ist ein Gleichstrommotor mit einem Kollektorelement (114) beschrieben, bei dem in einer zur Motorwelle Konzentrischen Bohrung (124) direkt an kollektor über eine Tachometerwelle (123) ein Tachometer betrieben wird.

Es ist daher die Aufgabe der vorliegenden Erfindung einen Gleichstrommotor, insbesondere einen Gleichstrommikromotor mit einem zusätzlichen Bauelement zu Verfügung zu stellen, der die Nachteile der bekannten Motoren überwindet.

Diese Aufgabe wird für einen Gleichstrommotor, insbesondere Mikrogleichstrommotor, mit einer Welle, einem darauf angeordnetem-Kollektorelement, bestehend aus einer Kollektorplatte und einem von der Kollektorplatte über das Wellenende hinaus abstehenden Kollektor, dadurch gelöst, daß das Kollektorelement an der von der Kollektorplatte abgewandten Seite über den Kollektor hinaus zu einem Wellenabschnitt verlängert ist, an dem ein zusätzliches Bauelement fest anbringbar ist.

Mit dem erfindungsgemäßen Gleichstrommotor wird ein Motor bereitsgestellt, der sich auf sehr einfache Art und Weise mit zusätzlichen Bauelementen verbinden läßt. Als Verbindungselement dient hierbei eine von dem Kollektorelement gebildete Verlängerung der Welle, so daß wie bei bekannten Motoren auftretenden Probleme mit der Fertigung sehr langer Wellen vermieden werden. Darüber hinaus kann auch der Kollektordurchmesser beibehalten werden, so daß eine Verkürzung der Nutzungsdauer des Motors umgangen wird.

Als besonders vorteilhaft ist hierbei festzuhalten, daß das Kollektorelement unabhängig von der späteren Verwendung immer mit angespritztem Wellenabschnitt hergestellt werden kann, wobei der Wellenabschnitt bei Bedarf verwendet oder vor Einbau des Kollektorelementes in den Motor entfernt werden kann. Hierdurch werden die mit der Herstellung und Lagerung von Ersatzteilen verbundenen Kosten reduziert, da nicht verschiedenste Teile hergestellt werden und gelagert müssen, sondern ein Teil kann mehrere Funktionen übernehmen kann.

In einer bevorzugten Ausführungsform ist der Gleichstrommotor mit einem ein Codeelement umfassenden Winkelschrittgeber ausgebildet, wobei als zusätzliches Bauelement das Codeelement fest an dem einem Wellenabschnitt verlängerten Kollektorelement angebracht ist.

Mit diesem bevorzugten Gleichstrommotor wird ein Motor mit Winkelschrittgeber bereitsgestellt, der sich insbesondere als Mikrogleichstrommotor einsetzen läßt, wobei die mit der Intregration des Winkelschrittgebers verbundenen bekannten Problems vermieden werden.

Ferner ist durch den großen Abstand zwischen dem Statormagneten und dem Codeelement eine Wechselwirkung zwischen diesen unterbunden. Die gegenseitige Beeinflussung der beiden Bauteile stellte bei den bekannten Anordnungen insbesondere bei der Befestigung der Codescheibe auf der Kollektorplatte ein Problem dar. Darüberhinaus kann das Gehäuse bis auf eine kleine Öffnung zur Durchführung des Codeelements abgeschlossen sein, so daß auch die Funktionssicherheit bei einer optischen Abtastung erheblich verbessert wird.

Der erfindungsgemäße Motor kann nahezu vollständig vormontiert werden. Die Montage des Winkelschrittgebers erfolgt erst bei Bestellung vor Auslieferung an den Kunden.

Als vorteilhaft hat sich ferner erwiesen, wenn das Codeelement den von der Kollektorplatte abliegenden Wellenabschnitt in einer zentral ausgebildeten Öffnung aufnimmt, wobei das Kollektorelement mindestens um den vom Codeelement aufgenommenen Endabschnitt verlängert ist

Diese Ausführungsform ermöglicht eine einfache und schnelle Montage des Codeelements auf dem Wellenabschnitt. Um hier eine möglicht hohe Paßgenauigkeit zu erzielen kann der Wellenabschnitt mit einem größeren Durchmesser als die zentrale Öffnung des Codeelementes gefertigt werden und vor dem Befestigen des Codeelements nachbearbeitet werden, z.B. durch Drehen. Gleichermaßen wäre es auch möglich Defekte des Wellenabschnittes zu beheben.

Vorzugsweise ist das Codeelement als Codescheibe ausgebildet.

Gemäß einer bevorzugten Ausführungsform ist das Kollektorelement mit Kollektorplatte , Kollektor und überstehendem Wellenabschnitt als einstückiges Spritzgußteil ausgebildet.

Folglich kann das Kollektorelement in einem Arbeitsgang gefertigt werden, zusätzliche Arbeitsschritte werden vermieden, so daß sich die Herstellungsdauer nicht erhöht. Da von dem solchermaßen gefertigten Teil der Winkelabschnitt leicht entfernt werden kann, z.B. durch Abschneiden oder Abzwicken, ist es nicht notwendig verschiedene dem späteren Einsatz angepaßte Kollektorelemente herzustellen. Hierdurch werden z.B. die Lagerkosten gesenkt.

Die vorliegende Erfindung betrifft des weiteren ein Kollektorelement mit Kollektorplatte und Kollektor, wobei im Bereich der Kollektorplatte eine zentrale Aufnahme für eine Motorwelle vorgesehen ist, wobei das Kollektorelement über den Kollektor hinaus zu einem Wellenabschnitt verlängert ist.

Das erfindungsgemäße Kollektorelement läßt sich ohne weiteres einstückig als Spritzgußteil fertigen und zeichnet sich durch die oben in bezug auf das in einem Gleichstrommotor enthaltene Kollektorelement beschriebenen Vorteile aus.

Erfindungsgemäß kann des weiteren vorgesehen sein, daß das Codeelement aus Kunststoff oder Glas hergestellt ist und der Code als optische Teilung vorliegt.

Alternativ kann das Codeelement aus einem hartmagnetischen Material gefertigt sein und der Code in Gestalt von Magnetpolen ausgestaltet sein.

Hierbei ist bevorzugt, daß in einem vorbestimmten Abstand vom äußeren Umfang der Codescheibe mindestens ein Sensorelement vorgesehen ist.

Das Sensorelement kann z.B. als ein optischer Sensor oder ein magnetischer Sensor ausgebildet sein.

Gemäß weiterer bevorzugter Ausführungsformen können die Codescheibe und der Wellenabschnitt verklebt werden oder die auf den Wellenabschnitt gepreßt werden.

Verkleben bzw. Verpressen stellen zwei Verbindungsverfahren dar, die sich leicht durchführen lassen und die Herstellungsdauer nicht wesentlich erhöhen. Gleichzeitig wird eine feste Verbindung zwischen der Codescheibe und dem Wellenabschnitt sichergestellt.

Im folgenden wird ein erfindungsgemäßer Gleichstrommotor gemäß einer bevorzugten Ausführungsform anhand von Zeichnungen näher erläutert. Es zeigen:
- Fig. 1: einen Axialschnitt durch einen Gleichstrommotor gemäß der vorliegenden Erfindung
- Fig. 2: ein Querschnitt längs der Linie A-A aus Figur 1

Bei dem im folgenden beschriebene Gleichstrommotor handelt es sich um einen Motor mit Winkelschrittgeber. Der erfindungsgemäße Motor ist jedoch nicht auf diese Motoren beschränkt, sondern umfaßt alle Gleichstrommotoren mit zusätzlichen Bauelement.

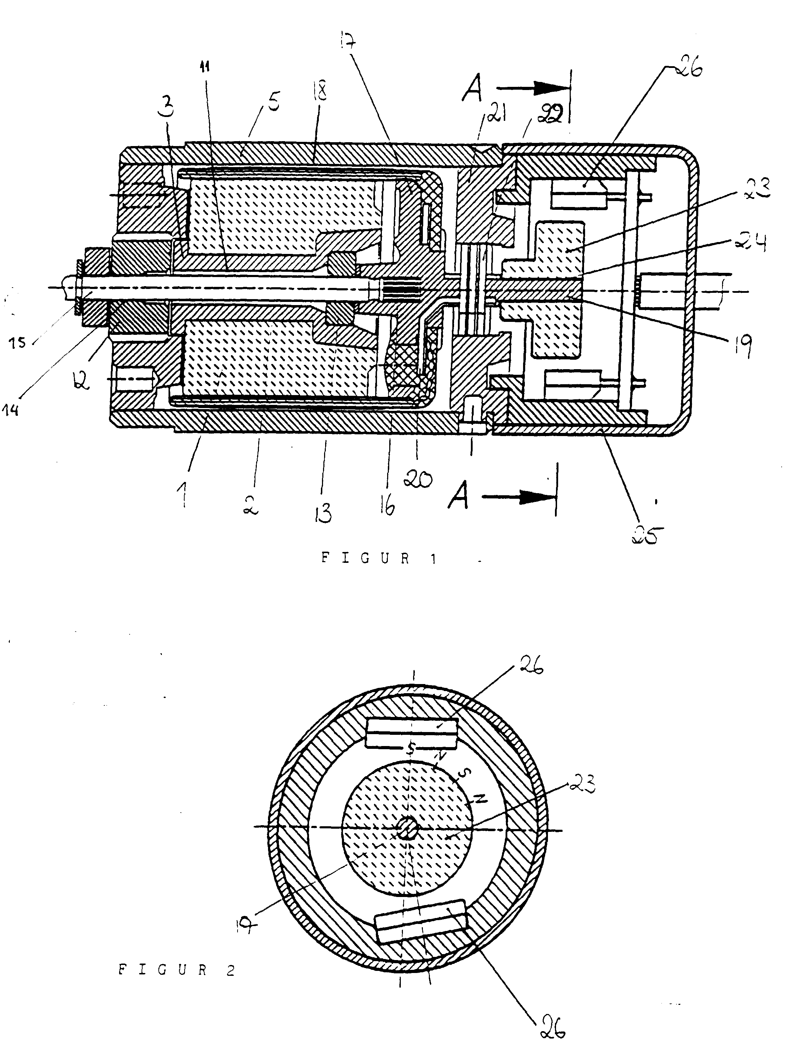

Der in den Figuren 1 und 2 dargestellte Gleichstrommotor umfaßt einen zylindrischen Permanentmagneten 1, der mit einer zentralen Öffnung 2 versehen ist. Der Permanentmagnet ist in zwei Spritzgußteile eingebettet, wobei sich eines dieser Spritzgußteile durch die zentrale Öffnung 2 erstreckt mit einer sich daran anschließenden Gehäusestirnplatte. Eine weiteres Spritzgußteil bildet eine Ummantelung 5. Diese Ummantelung schließt sich an die Gehäusestirnplatte an.

Das Spritzgußteil 3 ist mit einer zentralen Bohrung 11 versehen, die sich durch die gesamte Länge des Spritzgußteiles ersteckt und an den Enden Bereiche mit vergrößertem Durchmesser aufweist, die zur Aufnahme von Lagern 12 und 13 dienen. Diese Lager sind mit Lagerbohrungen 14 versehen, die eine Welle 15 aufnehmen, an deren Ende eine Riffelung 16 angebracht ist, um die ein kollektorelement bestehend aus einer Kollektorplatte 17 und einem über das Wellenende hinaus abstehendem Kollekto 19 gespritzt ist. Dabei trägt die Kollektorplatte 17 an ihrem größten Umfang eine Rotorwicklung 18. Der Kollektor 19 umfaßt eine Anzahl L-förmiger, metallener Lamellen 20, die mit den Anschlüssen der Rotorwicklung 18 verbunden sind.

An dem freien Ende der Ummantelung 5 liegt ein Bürstendeckel 21 an, der eine Vielzahl von Bürstenfedern 22 aufweist, die auf dem Kollektor 19 aufliegen. Der Bürstendeckel ist mit einer zentral ausgebildeten Öffnung versehen, durch die sich der Kollektor 19 erstreckt. Die Bürstenfedern 22 liegen dabei an dem Abschnitt des Kollektors an, der sich durch den Bürstendeckel erstreckt und diesem zugeordnet ist.

Das Kollektorelement ist an der von der Kollektorplatte abgewandten Seite über den Kollektor 19 hinaus zu einem Wellenabschnitt verlängert, der sich über den Bürstendeckel 21 hinaus erstreckt. An dem Wellenabschnitt ist eine Codescheibe 23 fest angebracht. Die Codescheibe ist als Stufenscheibe ausgebildet und mit einer zentral ausgebildeten Öffnung 24 versehen. Der Code kann als optische Teilung (Transmission oder Reflexion) oder als Magnetpole auf einem hartmagnetischen Trägermaterial vorliegen.

Bei der Montage wird die Codescheibe 23 auf den Wellenabschnitt aufgesetzt, so daß sich der Wellenabschnitt vollständig durch die Öffnung 24 erstreckt und bündig mit der Codescheibenoberfläche abschließt. Natürlich ist die vorliegende Erfindung nicht auf diese bevorzugte Ausführung beschränkt, sondern es gibt eine Vielzahl weitere Möglichkeiten um den Wellenabschnitt mit der Codescheibe zu verbinden. Zur Sicherheit oder besseren Verbindung kann die Codescheibe auf den Wellenabschnitt gepreßt werden. Gleichermaßen ist es möglich die Codescheibe mit dem Wellenabschnitt zu verkleben.

Die als Stufenscheibe ausgebildete Codescheibe weist zwei Bereiche unterschiedlichen Durchmessers auf, einen ersten der Kollektorplatte gegenüberliegenden Bereich mit kleinem Durchmesser und einen sich daran anschließenden zweiten Bereich mit größerem Durchmesser. Der Bereich mit kleinerem Durchmesser kann dabei so dimensioniert sein, daß dieser Bereich dem Durchmesser der Bürstendeckelöffnung entspricht oder kleiner als diese ausgebildet ist und zu einem vorbestimmten Anteil in der Bürstendeckelöffnung aufgenommen wird.

Die auf dem Wellenabschnitt befestigte Codescheibe ist von einem Abschirmungsgehäuse 25 umgeben. Das Abschirmungsgehäuse 25 ist becherförmig ausgebildet, wobei in dem offenen Ende die Codescheibe 23 aufgenommen wird. Der äußere Umfang des Abschirmungsgehäuses ist so ausgestaltet, daß das offene Ende des Abschirmungsgehäuse mit der Ummantelung 5 in Eingriff gebracht werden kann und das Abschirmungsgehäuse zusammen mit der Ummantelung 5 ein Außengehäuse bildet. Das Abschirmungsgehäuse dient unter anderem zur magnetischen und elektrischen Abschirmung.

Zur Erfassung der Winkelposition und der Drehrichtung sind bei radialer Abtastung am äusseren Umfang der Codescheibe im inneren des Abschirmgehäuses 25 in geringem Abstand zwei, je nach Art der Codescheibe optische bzw. magnetische Sensoren 26 angebracht. Befindet sich der Code auf der Vorderseite der Codescheibe 23, ist bei entsprechend geänderter Anordnung der sensoren ein axiales Abtasten möglich.

Soll nur eine Geschwindigkeitsregelung erfolgen oder ist nur eine Drehrichtung des Motors möglich, wäre ein Sensor ausreichend. Am Ausgang des Winkelschrittgebers stehen je nach integrierter Elektronik analoge oder TTL-Signale zur Verfügung.

## Patentansprüche

1. Gleichstrommotor, insbesondere Mikrogleichstrommotor, mit einer Welle (15), einem darauf angeordneten Kollektorelement, bestehend aus einer Kollektorplatte (17) und einem von der Kollektorplatte (17) über das Wellenende (16) hinaus abstehenden Kollektor, **dadurch gekennzeichnet**, daß das Kollektorelement an der von der Kollektorplatte (17) abgewandten Seite über den Kollektor hinaus zu einem Wellenabschnitt (19) verlängert ist, an dem ein zusätzliches Bauelenent (23) anbringbar ist.

2. Gleichstrommotor nach Anspruch 1, dadurch gekennzeichnet, daß der Gleichstrommotor mit einem ein Codeelement (23) umfassenden Winkelschrittgeber ausgebildet ist, wobei als zusätzliches Bauelement das Codeelement (23) fest an dem zu einem Wellenabschnitt verlängerten Kollektorelement angebracht ist.

3. Gleichstrommotor nach Anspruch 2, dadurch gekennzeichnet, daß das Codeelement den von der Kollektorplatte abliegenden Wellenabschnitt (19) in einer zentral ausgebildeten Öffnung aufnimmt, wobei das Kollektorelement mindestens um den vom Codeelement aufgenommenen Endabschnitt verlängert ist.

4. Gleichstrommotor nach Anspruch 2 und/oder 3, dadurch gekennzeichnet, daß das Codeelement als Codescheibe (23) ausgebildet ist.

5. Gleichstrommotor nach mindestens einem der Ansprüche 1-4, dadurch gekennzeichnet, daß das Kollektorelement mit Kollektorplatte (17), Kollektor und überstehendem Wellenabschnitt (19) als einstückiges Spritzgußteil ausgebildet ist.

6. Kollektorelement mit Kollektorplatte und Kollektor, wobei im Bereich der Kollektorplatte eine zentrale Aufnahme für eine Motorwelle vorgesehen ist, dadurch gekennzeichnet, daß das Kollektorelement über den Kollektor hinaus in einen Wellenabschnitt (19) verlängert ist.

7. Kollektorelement nach Anspruch 5 oder 6, dadurch gekennzeichnet, daß das Kollektorelement als einstückiges Spritzgußteil ausgebildet ist.

8. Gleichstrommotor nach Anspruch 4, dadurch gekennzeichnet, daß die Codescheibe (23) aus Kunststoff oder Glas hergestellt ist und der Code als optische Teilung vorliegt.

9. Gleichstrommotor nach Anspruch 4, dadurch gekennzeichnet, daß die codescheibe (23) aus einem hartmagnetischen Trägermaterial hergestellt ist und der Code als Magnetpole vorliegt.

10. Gleichstrommotor nach einem der Ansprüche 2 bis 5 und 8 bis 9, dadurch gekennzeichnet, daß in einem vorbestimmten Abstand vom äußeren Umfang des Codeelements mindestens ein Sensorelenent (26) vorgesehen ist.

11. Gleichstrommotor nach Anspruch 8 und 10, dadurch gekennzeichnet, daß das Sensorelement (26) ein optischer Sensor ist.

12. Gleichstrommotor nach Anspruch 9 und 10, dadurch gekennzeichnet, daß das Sensorelement (26) ein magnetischer Sensor ist.

13. Gleichstrommotor nach einem der Ansprüche 2-5 und 8-12, dadurch gekennzeichnet, daß das Codeelement (23) und der Wellenabschnitt (19) verklebt sind.

14. Gleichstrommotor nach einem der Ansprüche 2-5 und 8-12, dadurch gekennzeichnet, daß das Codeelement (23) auf den Wellenabschnitt (19) gepreßt ist.

## Claims

1. A dc motor, in particular a micro dc motor, comprising a shaft (15) and a collector element arranged on said shaft and consisting of a collector plate (17) and a collector which projects from said collector plate (17) beyond the shaft end (16), **characterized in that**, on the side facing away from the collector plate (17), the collector element is extended beyond the collector so as to form a shaft section (19), which is adapted to have attached thereto an additional component part (23).

2. A dc motor according to claim 1, characterized in that the dc motor is provided with an incremental angle-position encoder comprising an encoder element (23), the encoder element (23) being fixedly attached to the collector element, which is extended so as to form a shaft section, and constituting the additional component part.

3. A dc motor according to claim 2, characterized in that the encoder element receives in a central opening formed therein the shaft section (19) which is located remote from the the collector plate, the collector element being extended by at least the end section received in the encoder element.

4. A dc motor according to claim 2 and/or 3, characterized in that the encoder element (23) consists of an encoder disc.

5. A dc motor according to at least one of the claims 1 to 4, characterized in that the collector element consists of an integral injection-moulded part comprising the collector plate (17), the collector and the projecting shaft section (19).

6. A collector element comprising a collector plate and a collector, a central reception means for a motor shaft being provided in the area of the collector plate, characterized in that the collector element is extended beyond the collector so as to define a shaft section (19).

7. A collector element according to claim 5 or 6, characterized in that the collector element consists of an integral injection-moulded part.

8. A dc motor according to claim 4, characterized in that the encoder disc (23) is produced from plastic material or glass and that the code is provided in the form of optical information.

9. A dc motor according to claim 4, characterized in that the encoder disc (23) is produced from a hard-magnetic carrier material and that the code is provided in the form of magnetic poles.

10. A dc motor according to one of the claims 2 to 5 and 8 to 9, characterized in that at least one sensor element (26) is provided at a predetermined distance from the outer circumference of the encoder element.

11. A dc motor according to claims 8 and 10, characterized in that the sensor element (26) is an optical sensor.

12. A dc motor according to claims 9 and 10, characterized in that the sensor element (26) is a magnetic sensor.

13. A dc motor according to one of the claims 2-5 and 8-12, characterized in that the encoder element (23) and the shaft section (19) are connected by means of an adhesive.

14. A dc motor according to one of the claims 2-5 and 8-12, characterized in that the encoder element (23) is pressed onto the shaft section (19).

## Revendications

1. Moteur à courant continu, en particulier micromoteur à courant continu, comportant un arbre (15) et un élément collecteur qui est disposé sur celui-ci et qui comprend une plaque collectrice (17) et un collecteur qui dépasse de ladite plaque (17) au-delà de l'extrémité d'arbre (16), caractérisé en ce que l'élément collecteur est prolongé au-delà du collecteur, du côté opposé à la plaque collectrice (17), pour former une section d'arbre (19) sur laquelle un composant supplémentaire (23) peut être monté.

2. Moteur à courant continu selon la revendication 1, caractérisé en ce qu'il comporte un capteur de pas angulaire comprenant un élément de code (23), étant précisé que comme composant supplémentaire, l'élément de code (23) est solidaire de l'élément collecteur prolongé pour former une section d'arbre.

3. Moteur à courant continu selon la revendication 2, caractérisé en ce que l'élément de code reçoit dans une ouverture centrale la section d'arbre (19) qui dépasse de la plaque collectrice, l'élément collecteur étant prolongé au moins sur la section d'extrémité logée par l'élément de code.

4. Moteur à courant continu selon les revendications 2 et/ou 3, caractérisé en ce que l'élément de code est conçu comme un disque de code (23).

5. Moteur à courant, continu selon au moins l'une des revendications 1 à 4, caractérisé en ce que l'élément collecteur est constitué par une seule pièce moulée par injection comprenante la plaque collectrice (17), le collecteur et la section d'arbre (19) qui dépasse.

6. Elément collecteur comprenant une plaque collectrice et un collecteur, étant précisé qu'il est prévu dans la zone de la plaque collectrice un logement central pour un arbre moteur, caractérisé en ce que l'élément collecteur se prolonge au-delà du collecteur pour former une section d'arbre (19).

7. Elément collecteur selon la revendication 5 ou 6, caractérisé en ce qu'il est conçu comme une seule pièce moulée par injection.

8. Moteur à courant continu selon la revendication 4, caractérisé en ce que le disque de code (23) est en matière plastique ou en verre et le code se présente comme une division optique.

9. Moteur à courant continu selon la revendication 4, caractérisé en ce que le disque de code (23) est fabriqué à partir d'un support magnétique dur et le code se présente sous la forme de pôles magnétiques.

10. Moteur à courant continu selon l'une des revendications 2 à 5 et 8 à 9, caractérisé en ce qu'il est prévu, à une distance prédéfinie de la circonférence extérieure de l'élément de code, au moins un élément capteur (26).

11. Moteur à courant continu selon les revendications 8 et 10, caractérisé en ce que l'élément capteur (26) est un capteur optique.

12. Moteur à courant continu selon les revendications 9 et 10, caractérisé en ce que l'élément capteur (26) est un capteur magnétique.

13. Moteur à courant continu selon l'une des revendications 2 à 5 et 8 à 12, caractérisé en ce que l'élément de code (23) et la section d'arbre (19) sont collés ensemble.

14. Moteur à courant continu selon l'une des revendications 2 à 5 et 8 à 12, caractérisé en ce que l'élément de code (23) est pressé sur la section d'arbre (19).
